# FASCICULE DE BREVET EUROPEEN

(11) **EP 0 419 363 B1**
(45) Date de publication et mention de la délivrance du brevet: **17.01.1996**
(21) Numéro de dépôt: 90402606.9
(22) Date de dépôt: 20.09.1990
(51) Int. Cl.: H04M 1/31, H04M 11/06

(54) **Dispositif de numérotation décimale pour appareil raccordé à une ligne téléphonique**
Impulswahleinrichtung für ein an eine Fernsprechleitung angeschlossenes Gerät
Pulse dialling device for an apparatus connected to a telephone line

(30) Priorité: 21.09.1989 FR 8912399
(43) Date de publication de la demande: 27.03.1991
(73) Titulaire: SOCIETE D'APPLICATIONS GENERALES D'ELECTRICITE ET DE MECANIQUE SAGEM, F-75783 Paris Cédex 16 (FR)
(72) Inventeur: Charbonnier, Philippe, F-78600 Maisons Laffitte (FR); Vicens, Pierre, F-75013 Paris (FR)
(74) Mandataire: Bloch, Gérard

(56) Documents cités:
- WO-A-86/07659
- DE-A- 3 248 355
- DE-A- 3 325 676
- DE-C- 3 541 548
- US-A- 4 203 006
- US-A- 4 306 119

## Description

La présente invention a pour objet un dispositif de numérotation décimale pour appareil raccordé à une ligne téléphonique comprenant des moyens interrupteurs du courant dans la ligne téléphonique et des moyens de commande desdits moyens interrupteurs en réponse au numéro à composer, lesdits moyens interrupteurs comprenant un photocoupleur dont l'entrée est reliée auxdits moyens de commande et dont la sortie est reliée à l'électrode de commande d'un transistor, inséré dans ladite ligne téléphonique, dont la tension de claquage est compatible avec les surtensions susceptibles d'être induites dans ladite ligne téléphonique et dans lequel il est prévu, entre ladite ligne téléphonique et ledit transistor, un relais pour isoler ladite ligne téléphonique lorsque ledit appareil est au repos et lorsqu'il n'est pas alimenté en énergie électrique.

Un tel dispositif est utilisé notamment dans les télécopieurs, mais aussi dans les appareils de télésurveillance, les terminaux télématiques, ainsi que, d'une manière générale, dans tout appareil automatique ou non, raccordé à une ligne téléphonique et qui doit, pour établir une communication, procéder à une numérotation dite "décimale".

Dans une numérotation dite décimale, le courant de ligne est modulé en tout ou rien, alors que dans une numérotation dite à fréquence vocale, le courant de ligne est modulé par un signal dont la fréquence est située dans la gamme 300-3400 Hz. Alors que, dans la numérotation à fréquence vocale, on associe une fréquence déterminée à chaque chiffre du numéro à composer, dans la numérotation décimale on lui associe un nombre déterminé d'impulsions du courant de ligne.

On connaît, par les documents DE-C-3 541 548, DE-A-3 248 355 et US-A-4 306 116, des dispositifs de numérotation décimale dans lesquels le transistor de numérotation assure aussi, lorsque la conversation est établie, le passage du courant de ligne, afin de maintenir la prise de ligne.

Cependant, le courant alternatif de ligne, qui module le courant continu de prise de ligne afin de transmettre les signaux phoniques échangés par l'appareil utilisant le dispositif de numérotation, est affaibli par sa traversée du transistor de numérotation, ce qui dégrade les signaux phoniques.

La présente invention vise à supprimer cette dégradation.

A cet effet, elle a pour objet un dispositif de numérotation décimale pour appareil raccordé à une ligne téléphonique comprenant des moyens interrupteurs du courant dans la ligne téléphonique et des moyens de commande desdits moyens interrupteurs en réponse au numéro à composer, lesdits moyens interrupteurs comprenant un photocoupleur dont l'entrée est reliée auxdits moyens de commande et dont la sortie est reliée à l'électrode de commande d'un transistor, inséré dans ladite ligne téléphonique, dont la tension de claquage est compatible avec les surtensions susceptibles d'être induites dans ladite ligne téléphonique et dans lequel il est prévu, entre ladite ligne téléphonique et ledit transistor, un relais pour isoler ladite ligne téléphonique lorsque ledit appareil est au repos et lorsqu'il n'est pas alimenté en énergie électrique, caractérisé par le fait qu'il comporte des moyens pour augmenter la valeur, en régime alternatif, de l'impédance présentée à ladite ligne téléphonique par ledit transistor, lorsqu'une communication téléphonique est établie.

Ainsi le transistor ne provoque aucune atténuation notable du signal alternatif utile pendant la communication.

De préférence, lesdits moyens d'augmentation comprennent un condensateur et des moyens pour refermer l'entrée de commande du transistor sur ledit condensateur lorsqu'une communication téléphonique est établie.

Avantageusement encore, il est prévu des moyens régulateurs de courant continu, insérés en série avec ledit transistor dans ladite ligne téléphonique, et des moyens pour rendre ledit transistor passant lorsqu'une communication téléphonique est établie.

Dans ce cas, il n'est pas nécessaire de prévoir un relais spécialement destiné à la mise en service des moyens de régulation du courant continu pendant la communication proprement dite, car la chute de tension aux bornes du transistor rendu passant reste faible et n'influence pas de façon notable le fon fonctionnement des moyens régulateurs du courant continu.

Avantageusement toujours, ledit transistor est un transistor MOS.

Ceci permet de réduire encore le prix de revient du dispositif car il existe des transistors MOS à tension de claquage élevée et dont le coût est particulièrement faible.

La présente invention sera mieux comprise à la lecture de la description suivante de la forme de réalisation préférée du dispositif de l'invention, faite en se référant aux dessins annexés, sur lesquels :

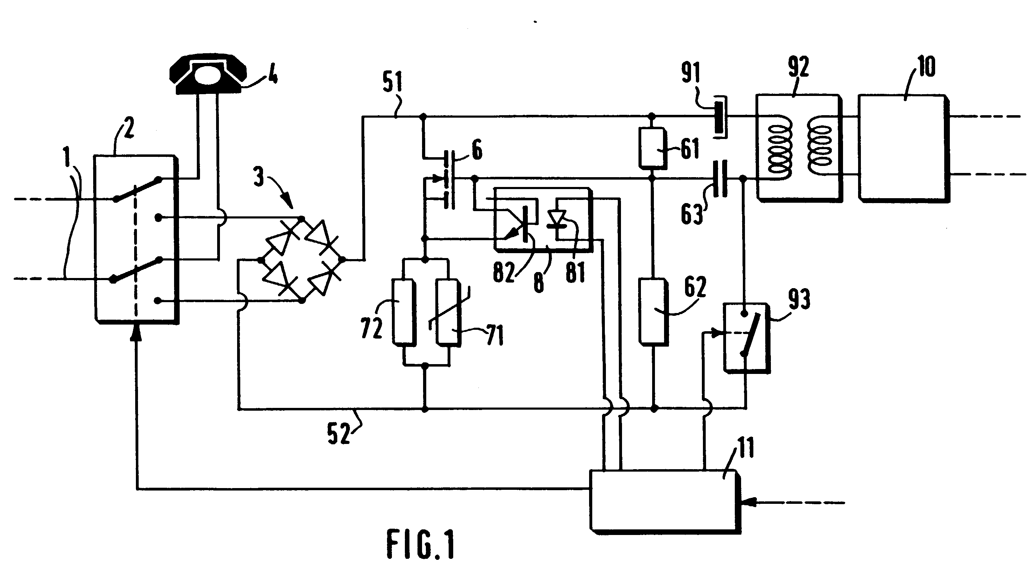

- la figure 1 est un schéma simplifié d'un dispositif de numérotation selon l'invention,

Dans ce cas, le transistor ne provoque aucune atténuation notable du signal alternatif utile pendant la communication.

De préférence, lesdits moyens d'augmentation comprennent un condensateur et des moyens pour refermer l'entrée de commande du transistor sur ledit condensateur lorsqu'une communication téléphonique est établie.

Avantageusement encore, il est prévu des moyens régulateurs de courant continu, insérés en série avec ledit transistor dans ladite ligne téléphonique, et des moyens pour rendre ledit transistor passant lorsqu'une communication téléphonique est établie.

Dans ce cas, il n'est pas nécessaire de prévoir un relais spécialement destiné à la mise en service des moyens de régulation du courant continu pendant la communication proprement dite, car la chute de tension aux bornes du transistor rendu passant reste faible et n'influence pas de façon notable le fon fonctionnement des moyens régulateurs du courant continu.

Avantageusement toujours, ledit transistor est un transistor MOS.

Ceci permet de réduire encore le prix de revient du dispositif car il existe des transistors MOS à tension de claquage élevée et dont le coût est particulièrement faible.

La présente invention sera mieux comprise à la lecture de la description suivante de la forme de réalisation préférée du dispositif de l'invention, faite en se référant aux dessins annexés, sur lesquels :
- la figure 1 est un schéma simplifié d'un dispositif de numérotation selon l'invention,
- la figure 2 est un schéma équivalent au schéma de la figure 1, valable pendant la prise de ligne et la numérotation, et,
- la figure 3 est un schéma équivalent du schéma de la figure 1, valable pendant une communication téléphonique.

En se référant à la figure 1, un dispositif de numérotation pour un appareil automatique raccordé à une ligne téléphonique est maintenant décrit. L'appareil dont il s'agit est par exemple un télécopieur.

Dans un souci de simplification, les organes connus du télécopieur, et dont la description n'est pas nécessaire à la compréhension de l'invention n'ont pas été représentés sur la figure 1.

Comme le montre la figure 1, la ligne téléphonique à laquelle est raccordé l'appareil, ligne portant la référence 1, est reliée à un circuit 3 de redressement par l'intermédiaire d'un relais double 2.

Le relais double 2 comprend ici deux commutateurs qui relient chacun un des deux conducteurs de la ligne 1 soit au circuit de redressement 3, soit à un poste téléphonique conventionnel 4. La position de repos mécanique du relais double 2 correspondant à l'isolation entre la ligne 1 et le circuit de redressement 3, la ligne 1 étant alors reliée au poste 4.

Le circuit de redressement 3 est du type connu comprenant quatre diodes. La tension de ligne redressée est disponible entre un conducteur 51 et un conducteur 52, le potentiel du conducteur 51 étant toujours supérieur au potentiel du conducteur 52.

Le drain d'un transistor a effet de champ 6, de type MOS à canal N, est relié au conducteur 51, tandis que sa source est reliée au conducteur 52 par l'intermédiaire, ici, d'un ensemble comprenant une résistance 71 à coefficient de température positif (CTP), et une résistance conventionnelle 72. Le transistor MOS 6 est choisi pour avoir une tension de claquage drain-source relativement élevée, compatible avec les surtensions susceptibles d'être induites sur la ligne 1. Ici, les crêtes de la tension continue de ligne, entre les conducteurs 51 et 52, atteignent 200 V en présence de sonnerie, et de l'ordre de 300 V en cas de surtension écrêtée par un parafoudre non représenté sur la figure 1. Il faut alors que le transistor MOS ait une tension de claquage supérieure à 300 V. La résistance CTP 71 est ici le modèle commercialisé par la société RTC sous la référence TPJ, la résistance 72 ayant une valeur de 750Ω.

L'électrode de commande, ici la grille, du transistor MOS 6 est polarisée par un pont de deux résistances 61 et 62 disposé entre les conducteurs 51 et 52. La résistance 61, reliée au conducteur 51, vaut ici 560 kΩ et la résistance 62, reliée au conducteur 52, vaut 1 MΩ.

La sortie d'un photocoupleur 8 est reliée à l'entrée de commande grille-source du transistor MOS 6.

Le conducteur 51 est relié par l'intermédiaire d'un condensateur de liaison 91, à une extrémité d'un enroulement primaire d'un transformateur d'isolement 92. L'autre extrémité de cet enroulement primaire est reliée d'une part par l'intermédiaire d'un condensateur 63, d'ici 10 nF, à la grille du transistor MOS 6, et d'autre part par l'intermédiaire d'un relais 93 au conducteur 52.

L'enroulement secondaire du transformateur d'isolement 92 est relié à un modem 10, lui-même relié aux circuits non représentés du télécopieur.

Un circuit de commande 11, également relié aux circuits non représentés du télécopieur, est pourvu de trois sorties reliées respectivement à l'entrée de commande du relais 2, à l'entrée de commande du relais 93, et à l'entrée du photocoupleur 8.

Le photocoupleur 8 est ici du type courant qui comprend, à l'entrée, une diode électroluminescente 81, qui agit sur un phototransistor de sortie 82. La sortie du photocoupleur 8 est prise entre l'émetteur et le collecteur du phototransistor 82, qui présente une tension de claquage de valeur courante, par exemple, de l'ordre de 50 V.

Le dispositif qui vient d'être décrit fonctionne comme suit.

Lorsque le télécopieur est au repos, où lorsqu'il n'est pas alimenté en énergie électrique, le circuit de commande 11 n'envoie aucun signal vers le relais double 2 et celui-ci reste dans sa position de repos mécanique où le télécopieur se trouve isolé, la ligne 1 étant reliée ici au poste téléphonique 4, ce qui assure le respect des conditions d'isolation imposées lorsque le télécopieur est au repos ou non alimenté en énergie électrique.

Lorsque le télécopieur doit prendre la ligne téléphonique 1, le circuit de commande 11 commande le relais 2 afin que la ligne 1 se trouve reliée au circuit de redressement 3, le relais 93 afin qu'il soit ouvert, et le photocoupleur 8 afin que le phototransistor 82 se comporte comme un circuit ouvert. La grille du transistor MOS 6 est alors polarisée par le pont de résistances 61 et 62, ce qui rend ce transistor 6 passant. Il en résuste que tout se passe comme si le circuit de redressement 3 était chargé par la résistance CTP 71 en parallèle avec la résistance 72. Le courant continu de ligne s'établit donc et se trouve régulé, de façon connue, par la résistance CTP 71, afin d'avoir une valeur correcte quelle que soit, notamment, la longueur de la ligne 1. En effet, la faible chute de tension entre la source et le drain du transistor MOS 6, de l'ordre de quelques volts, ne perturbe pas de façon notable, le fonctionnement de l'ensemble des résistances 71 et 72 en parallèle, ensemble disposé en série avec le transistor MOS 6.

Après la prise de ligne qui vient d'être décrite, il est procédé à la numérotation. Celle-ci, de type décimal comme cela a déjà été mentionné, est commandée par le circuit de commande 11 qui maintient le relais 2 dans l'état où la ligne 1 est reliée au circuit de redressement 3 et le relais 93 dans l'état ouvert, et qui commande l'entrée du photocoupleur 8 afin de rendre le phototransistor 82 alternativement passant et bloqué. Il en résulte que le transistor MOS 6 est alternativement bloqué et passant, ce qui provoque des interruptions du courant de ligne. Le circuit de commande 11 est agencé pour que les impulsions résultantes du courant aient les caractéristiques requises, notamment en ce qui concerne leurs formes, temps de montée, et temps de descente.

Du fait que le relais 93 reste ouvert, les impédances réactives des condensateurs 91 et 63, ainsi que de l'enroulement primaire du transformateur d'isolement 92 restent sans influence pendant la phase de numérotation, et ne risquent donc pas de déformer les fronts des impulsions de numérotation. Par ailleurs, en phase numérotation, le photocoupleur 8 n'est soumis à aucune tension élevée. Lorsque le phototransistor 82 est bloqué, le transistor MOS 6 est passant et maintient sa tension grille-source à quelques volts, et lorsque le phototransistor 82 est passant, le transistor MOS 6 est bloqué et supporte l'intégralité des surtensions. De plus, comme pendant la numérotation, les exigences sur le courant résiduel pendant les interruptions de courant sont moins sévères qu'au repos, les résistances de polarisation 61 et 62 ont des valeurs raisonnables.

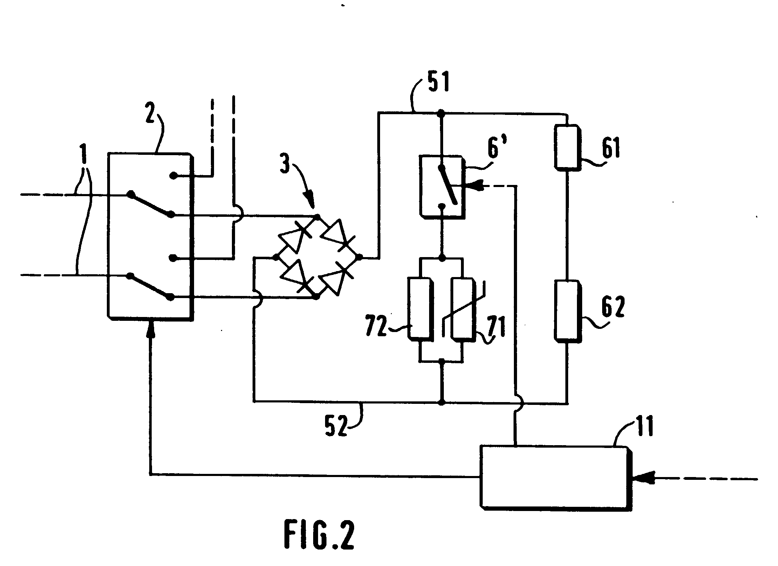

La figure 2 montre un schéma équivalent au dispositif de la figure 1, valable pendant la prise de ligne et pendant la numérotation. Sur la figure 2, le transistor MOS 6 a été remplacé par un interrupteur noté 6', commandé par le circuit de commande 11, par l'intermédiaire du photocoupleur 8, non représenté sur la figure 2.

Lorsque la numérotation a été effectuée et que la communication est établie, le circuit de commande 11 maintient le relais 2 dans l'état où la ligne 1 est reliée au circuit de redressement 3, et commande la fermeture du relais 93. Par ailleurs, le circuit de commande n'envoie aucune tension à l'entrée du photocoupleur 8, ce qui maintient le transistor MOS 6 à l'état passant.

De façon connue, pendant la communication la tension sur la ligne est égale à une tension continue à laquelle est superposée une tension alternative qui porte les informations utiles. En continu, le comportement du dispositif est le même que lors de la prise de ligne, du fait des condensateurs 91 et 63. Il y a donc régulation du courant continu de ligne par la résistance CTP 71 associée à la résistance 72.

Par contre, la composante alternative du courant de ligne se referme du conducteur 51 au conducteur 52 en passant par le condensateur 91 et l'enroulement primaire du transformateur d'isolement 92, du fait que le relais 93 est fermé. Ceci permet à la composante utile, dans la gamme 300-3400 H_{Z}, de passer par le modem 10 vers les circuits de traitement du télécopieur.

Du fait que le relais 93 est fermé, l'entrée de commande du transistor MOS 6, c'est-à-dire son circuit source-grille, est refermée sur le condensateur 63. Par effet Miller, la présence de ce condensateur 63 ramène, dans le circuit drain-source une inductance d'une valeur de l'ordre du Henry. Il en résulte une augmentation, à une valeur grande devant celle de l'impédance de la ligne et du modem, ici égale à 600Ω, de l'impédance présentée à la ligne par le transistor MOS 6. Ainsi, le transistor MOS 6 isole, en alternatif, l'ensemble formé par la résistance CTP 71 et la résistance 72, de façon à ce que la totalité du courant alternatif utile passe dans l'enroulement primaire du transformateur d'isolement 92. Tout affaiblissement du signal alternatif utile est donc ainsi évité.

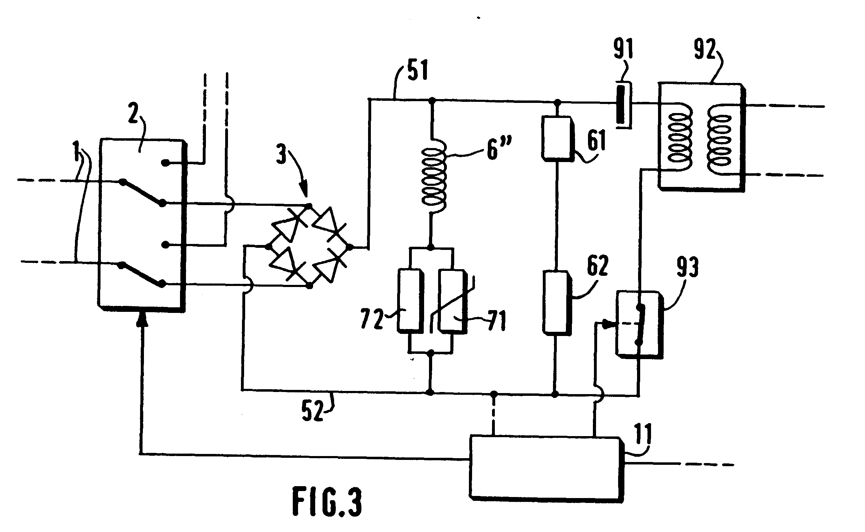

La figure 3 représente un schéma équivalent en régime alternatif, pendant la communication proprement dite, du dispositif de l'invention. Sur la figure 3, le transistor MOS 6 est représenté sous forme d'une inductance 6".

Naturellement, la présente invention n'est pas limitée à la description qui vient d'être faite. Par exemple, s'il est avantageux d'utiliser un transistor à effet de champ de type MOS, car il existe des composants de ce type d'un coût modeste et ayant une tension de claquage élevée, ceci n'est pas obligatoire, et on pourrait utiliser tout autre type de transistor ayant une tension de claquage compatible avec les surtensions induites sur la ligne.

## Revendications

1. Dispositif de numérotation décimale pour appareil raccordé à une ligne téléphonique (1) comprenant des moyens interrupteurs (6, 8) du courant dans la ligne téléphonique (1) et des moyens de commande (11) desdits moyens interrupteurs (6, 8) en réponse au numéro à composer, lesdits moyens interrupteurs comprenant un photocoupleur (8) dont l'entrée est reliée auxdits moyens de commande (11) et dont la sortie est reliée à l'électrode de commande d'un transistor (6), inséré dans ladite ligne téléphonique (1), dont la tension de claquage est compatible avec les surtensions susceptibles d'être induites dans ladite ligne téléphonique (1) et dans lequel il est prévu, entre ladite ligne téléphonique (1) et ledit transistor (6), un relais (2) pour isoler ladite ligne téléphonique (1) lorsque ledit appareil est au repos et lorsqu'il n'est pas alimenté en énergie électrique, caractérisé par le fait qu'il comporte des moyens (11, 63, 93) pour augmenter la valeur, en régime alternatif, de l'impédance présentée à ladite ligne téléphonique (1) par ledit transistor (6), lorsqu'une communication téléphonique est établie.

2. Dispositif selon la revendication 1, dans lequel lesdits moyens d'augmentation comprennent un condensateur (63) et des moyens (11, 93) pour refermer l'entrée de commande dudit transistor (6) sur ledit condensateur (63) lorsqu'une communication téléphonique est établie.

3. Dispositif selon l'une des revendications 1 et 2, dans lequel il est prévu des moyens régulateurs de courant continu (71, 72), insérés en série avec ledit transistor (6) dans ladite ligne téléphonique (1), et des moyens (11) pour rendre ledit transistor passant lorsqu'une communication téléphonique est établie.

4. Dispositif selon l'une des revendications 1 à 3, dans lequel ledit transistor est un transistor MOS.

## Patentansprüche

1. Vorrichtung zur Dezimalrufnummerwahl für ein an eine Fernsprechleitung (1) angeschlossenes Gerät, die Mittel (6, 8) zur Unterbrechung des Stroms in der Fernsprechleitung (1) und Mittel (11) zur Steuerung dieser Unterbrechungsmittel (6, 8) als Antwort auf die zu wählende Rufnummer umfaßt, wobei diese Unterbrechungsmittel einen Fotokoppler (8) umfassen, dessen Eingang mit diesen Steuermitteln (11) und dessen Ausgang mit der Steuerelektrode eines in diese Fernsprechleitung (1) eingesetzten Transistors (6) verbunden ist, dessen Durchbruchspannung mit den Überspannungen kompatibel ist, die in dieser Fernsprechleitung (1) induziert werden können, und in der zwischen dieser Fernsprechleitung (1) und diesem Transistor (6) ein Relais (2) vorgesehen ist, um die Fernsprechleitung (1) abzutrennen, wenn dieses Gerät im Ruhestand ist und wenn es nicht mit elektrischer Energie versorgt ist, dadurch gekennzeichnet, daß sie Mittel (11, 63, 93) aufweist, um im Wechsel-Betrieb den Wert der von diesem Transistor (6) dieser Fernsprechleitung (1) gebotenen Impedanz zu erhöhen, wenn eine Fernsprechverbindung hergestellt ist.

2. Vorrichtung nach Anspruch 1, in der diese Erhöhungsmittel einen Kondensator (63) und Mittel (11, 93) umfassen, um den Steuereingang dieses Transistors (6) an diesen Kondensator (63) anzuschließen, wenn eine Fernsprechverbindung hergestellt ist.

3. Vorrichtung nach einem der Ansprüche 1 und 2, in der Gleichstromregulierungsmittel (71, 72), die mit diesem Transistor (6) in Reihe in diese Fernsprechleitung (1) eingesetzt sind, und Mittel (11) vorgesehen sind, um diesen Transistor leitend zu machen, wenn eine Fernsprechverbindung hergestellt ist.

4. Vorrichtung nach einem der Ansprüche 1 bis 3, in der dieser Transistor ein MOS-Transistor ist.

## Claims

1. A decimal dialling device for a machine connected to a telephone line (1), comprising means (6, 8) for interrupting the current in the telephone line (1) ) and means (11) for controlling said interrupting means (6, 8) in response to the number to be dialled, the interrupting means comprising a photocoupler (8) whose input is connected to said control means (11) and whose ouptput is connected to the control electrode of a transistor (6), inserted in the said telephone line (1), whose break-down voltage is compatible with the voltage surges likely to be induced on the said telephone line (1) and wherein there is provided, between the said telephone line (1) and the said transistor (6), a relay (2) to isolate the said telephone line (1) when the said machine is at rest and when it is not being supplied with electrical energy, characterised in that it comprises means (11, 63, 93) of increasing the value, in alternating operating conditions, of the impedance presented to the said telephone line (1) by the said transistor (6), when a telephone call is established.

2. A device as claimed in Claim 1, wherein the said increasing means comprise a capacitor (63) and means (11, 93) of closing off the control input of the said transistor (6) on the said capacitor (63) when a telephone call is established.

3. Device as claimed in either of Claims 1 and 2 wherein there are provided direct current regulating means (71, 72), inserted in series with the said transistor (6) in the said telephone line (1), and means (11) to put the said transistor in a conductive state when a telephone call is established.

4. A device as claimed in any of Claims 1 to 3, wherein the said transistor is a MOS transistor.
